# EUROPÄISCHE PATENTSCHRIFT

(11) **EP 3 996 944 B1**
(45) Veröffentlichungstag und Bekanntmachung des Hinweises auf die Patenterteilung: **28.01.2026**
(21) Anmeldenummer: 20746550.1
(22) Anmeldetag: 07.07.2020
(51) Int. Cl.: B60K 1/00, B60K 11/02, F16H 57/04, B60K 17/04

(54) **ELEKTRISCHE ANTRIEBSEINHEIT FÜR EIN KRAFTFAHRZEUG**
ELECTRIC DRIVE UNIT FOR A MOTOR VEHICLE
UNITÉ D'ENTRAÎNEMENT ÉLECTRIQUE CONÇUE POUR UN VÉHICULE AUTOMOBILE

(30) Priorität: 12.07.2019 DE 102019118967
(43) Veröffentlichungstag der Anmeldung: 18.05.2022
(73) Patentinhaber: BPW Bergische Achsen KG, 51674 Wiehl (DE)
(72) Erfinder: BRUNNER, Dominik, 8572 Berg TG (CH); STEINER, Urs, 9552 Bronschhofen (CH)
(74) Vertreter: DREISS Patentanwälte PartG mbB
(86) Internationale Anmeldenummer: PCT/DE2020/100595
(87) Internationale Veröffentlichungsnummer: WO 2021/008654

(56) Entgegenhaltungen:
- WO-A1-2007/013642
- DE-A1- 102012 112 379
- US-A- 5 443 130
- US-A1- 2011 192 245
- US-B2- 7 059 443

## Beschreibung

Die Erfindung betrifft eine elektrische Antriebseinheit für ein Kraftfahrzeug, mit einem Elektro antrieb, einem dem Elektroantrieb in Kraftflussrichtung nachgeschalteten und in einem Getriebegehäuse angeordneten Getriebe, Mitteln zum Umwälzen von Kühlflüssigkeit im Innenraum des Getriebegehäuses, und einer drehbar angeordneten Eingangs- oder Ausgangswelle des Getriebes, wobei sich das Getriebegehäuse aus einem eine zentrale Achse ringförmig umgebenden Gehäusemantel und einer Stirnwand zusammensetzt, und wobei sich die Stirn wand von einer Öffnung für die Eingangs- oder die Ausgangswelle radial nach außen bis zu einem Verbindungsbereich erstreckt, in dem die Stirnwand und der Gehäusemantel miteinander verbunden sind.

Eine solche elektrische Antriebseinheit dient als Fahrantrieb eines Fahrzeugs. Zum Einsatz kommt sie vorzugsweise als Bestandteil einer elektrischen Antriebsachse für ein Nutzfahrzeug. Bei dieser Bauart einer Fahrzeugachse ist dem gewichtsgünstig nahe der Fahrzeugmitte angeordneten Elektroantrieb ein mehrstufiges Getriebe nachgeschaltet. Das Getriebe ist allein oder auch zusammen mit dem Elektroantrieb in einem Gehäuse angeordnet, welches sich aus einem den Innenraum des Getriebes einschließlich der darin angeordneten Getriebeelemente umschließenden Gehäusemantel und einer den Innenraum an der Stirnseite verschließenden Stirnwand zusammensetzt. Der Gehäusemantel ist überwiegend ringförmig gestaltet. Die Stirnwand erstreckt sich im Wesentlichen radial und ist zentral mit einer Öffnung versehen, durch die hindurch die Getriebeeingangswelle oder die Getriebeausgangs welle führt.

Aus der US 5 443 130 A ist ein Antriebssystem für ein elektrisch angetriebenes Fahrzeug bekannt.

Zur Kühlung der Getriebeelemente wird Kühlflüssigkeit im Innenraum des Getriebegehäuses umgewälzt, wobei dies in einem Kreislauf erfolgt, bei dem die Kühlflüssigkeit möglichst alle mechanisch belasteten Bereiche des Getriebes einschließlich der vorhandenen Wälzlagerun gen für die sich drehenden Getriebeelemente durchströmt. Als Kühlflüssigkeit dient vorzugsweise ein Getriebeöl, so dass diese Flüssigkeit sowohl die Getriebeelemente schmiert, als auch den Wärmeabtransport übernimmt.

Insbesondere wenn das Getriebe als Planetengetriebe ausgebildet ist, kommt es an der Innenseite des Gehäusemantels zu einem starken Rotieren des Getriebeöls. Durch die Rotation des Öls bildet sich ein an der Innenseite des Getriebegehäuses ringförmig umlaufender Ölsumpf. Dieser erschwert im Falle einer Einspritzschmierung den idealen Ablauf der Schmierung. Insbesondere erschwert im Rahmen der Ölumwälzung ist das Absaugen des Öls, da das Öl aufgrund der genannten Rotation mit hoher Fließgeschwindigkeit an dem vor gesehenen Ölablauf vorbeiströmt, statt vollständig in diesen einzutreten.

Der Erfindung liegt die Aufgabe zugrunde, durch konstruktive Maßnahmen die Strömungsverhältnisse insbesondere in solchen Bereichen des Getriebegehäuses zu verbessern, in denen im Rahmen des Umwälzens der Kühlflüssigkeit diese aus dem Getriebegehäuse abgeführt bzw. abgesaugt wird.

Zur Lösung dieser Aufgabe wird eine elektrische Antriebseinheit mit den Merkmalen des Patentanspruchs 1 vorgeschlagen.

Dabei dient eine zusätzliche Ringkammer, die nur über einzelne Öffnungen mit dem Innenraum des Getriebegehäuses verbunden ist, der Beruhigung der in anderen Bereichen des Getriebegehäuses mit hoher Geschwindigkeit strömenden bzw. rotierenden Kühlflüssigkeit. Für die Kühlflüssigkeit hat die Ringkammer die Funktion einer Beruhigungszone. Die ringförmige Beruhigungszone ist dazu vorzugsweise auf einem großen Durchmesser angeordnet. Die ringförmige Beruhigungszone ist auf bestimmten Umfangsabschnitten, nämlich im Bereich der einzelnen Öffnungen, zu dem Innenraum hin offen, so dass Kühlflüssigkeit und ins besondere Getriebeöl über diese Öffnungen in die Ringkammer einströmen kann und darin beruhigt wird. Auf anderen Umfangsabschnitten hingegen ist die Ringkammer im Wesentlichen gegenüber dem Getriebeinnenraum geschlossen, so dass in diesen Umfangsbereichen kein wesentlicher Kühlflüssigkeitsaustausch stattfindet und sich die Flüssigkeit und vor allem deren Strömung in diesen Bereichen der Ringkammer beruhigen kann. Infolge der Strömungsberuhigung wird die Ölabsaugung bzw. der Ölablauf wesentlich verbessert, insbesondere, wenn die Platzverhältnisse im Bereich der Ölabsaugung ohnehin knapp bemessen sind.

Gemäß einer bevorzugten Ausgestaltung der ringförmigen Beruhigungszone ist es von Vor teil, wenn sich in Umfangsrichtung die Öffnungen mit öffnungsfreien Umfangsabschnitten abwechseln. Zum Beispiel kann die Zahl der Öffnungen und der öffnungsfreien Umfangsabschnitte der Ringkammer jeweils sechs bis zehn betragen.

Hinsichtlich der als Beruhigungszone dienenden Ringkammer wird vorgeschlagen, dass die Wandung der Ringkammer teilweise durch den Gehäusemantel, und teilweise durch die Stirnwand gebildet wird, wobei die Stirnwand eine Trennwand zwischen dem Getriebe und dem Elektromotor der Antriebseinheit ist.

Damit die Ringkammer auf einem großen Durchmesser angeordnet ist, wird vorgeschlagen, dass der Durchmesser der Ringkammer größer ist als der größte Durchmesser, den die Innenseite des Gehäusemantels außerhalb des Bereichs der Ringkammer aufweist.

Ferner wird vorgeschlagen, dass die Ringkammer zu dem Innenraum hin durch eine innere Kammerwand, und zur Außenseite des Gehäusemantels hin durch eine äußere Kammer wand begrenzt ist, wobei sich die Öffnungen und die öffnungsfreien Umfangsabschnitte in bzw. an der inneren Kammerwand befinden.

Gemäß einer vor allem herstellungstechnisch vorteilhaften Ausgestaltung ist die innere Kammerwand zinnenförmig gestaltet, wobei die Zinnen die öffnungsfreien Umfangsabschnitte bilden, und die Umfangsbereiche zwischen den Zinnen die Öffnungen. Vorzugsweise ist die axiale Erstreckung der Öffnungen, d.h. deren Erstreckung in Richtung der Achse, geringer als die axiale Länge der Ringkammer.

In Bezug auf die Querschnittsgeometrie der Ringkammer wird ferner vorgeschlagen, dass die Länge der Ringkammer in Achsrichtung größer ist, als die maximale Breite der Ringkammer, gemessen zwischen der inneren und der äußeren Kammerwand.

Vorzugsweise sind in dem Gehäusemantel Bohrungen oder Kanäle vorgesehen, die von der Ringkammer bis auf die Außenseite des Gehäusemantels führen. Diese Bohrungen bzw. Kanäle können im Zusammenhang mit der Kühlmittelführung unterschiedlichen Funktionen und Zwecken dienen. Zum Beispiel können die äußeren Enden der Bohrungen bzw. Kanäle mit einem Gewinde versehen sein, um so ein Entlüftungsventil, einen Entlüftungsfilter, einen Messstopfen zur Detektion des Kühlflüssigkeitsstands, eine magnetisch arbeitende Fangvorrichtung für Metallspäne oder einen Temperatursensor in der jeweiligen Bohrung bzw. in dem jeweiligen Kanal anzuordnen. Eine der Bohrungen oder Kanäle, vorzugsweise am tiefsten Punkt der Ringkammer gelegen, dient dem Ablass bzw. dem Ablaufen des Getriebeöls in einen unterhalb angeordneten Sammler.

Da die mit den Bohrungen oder Kanälen verknüpften Funktionen teilweise einen größeren Platzbedarf haben, wird mit einer weiteren Ausgestaltung vorgeschlagen, dass der Gehäusemantel um die Ringkammer herum als ein gegenüber dem übrigen Gehäusemantel radial erweiterter Flansch ausgebildet ist, und dass die Bohrungen oder Kanäle durch den Flansch bis auf dessen Außenseite führen. Das mit dem radial erweiterten Flansch verbundene, zusätzliche Volumen wird also nutzbar gemacht, um Platz für hinreichend große Bohrungen oder Kanäle zu gewinnen, sowie Platz für die diesen Bohrungen oder Kanälen zugewiesenen technischen Zweckbestimmungen.

Zusätzlich kann der Flansch der Verschraubung des Getriebegehäuses z. B. mit dem direkt benachbarten Motorgehäuse des Elektroantriebs dienen. Zu diesem Zweck ist von Vorteil, wenn der Flansch mit über seinen Umfang verteilt angeordneten Axialöffnungen zur Aufnahme von Schrauben oder Schraubbolzen versehen ist, z. B. Schraubbolzen als starre Verbindungselemente zwischen Getriebegehäuse und Motorgehäuse.

Zur Erzielung besonders günstiger Strömungsverhältnisse im Bereich der Beruhigungszone wird vorgeschlagen, dass die Stirnwand mit einem sich in die Ringkammer erstreckenden Bund versehen ist, und dass der Übergang zwischen dem radial sich erstreckenden Teil der Stirnwand und dem Bund als eine Rundung ausgebildet ist. Vorzugsweise beträgt der Radius dieser Rundung zwischen 25 % und 75 % der maximalen Breite der Ringkammer, gemessen zwischen der inneren Kammerwand und der äußeren Kammerwand.

Die Wandung der Ringkammer ist, soweit die Wandung durch den Gehäusemantel gebildet wird, eine U-förmige Wandung einer zu der Stirnwand hin offenen Nut.

Die zu der Stirnwand hin offene Nut schafft die Möglichkeit, an der Stirnwand einen sich in die Ringkammer erstreckenden Bund anzuformen, wobei der Bund gegen eine der Wände der Nut anliegt, vorzugweise gegen die radial äußere Wand der Nut. Bei dieser Ausgestaltung hat die Nut nicht nur die Aufgabe der Beruhigung der Kühlmittelströmung, sondern die Nut ist zugleich ein Zentrierelement, um die Stirnwand im Verbindungsbereich in exakter Ausrichtung an dem Gehäusemantel festzulegen. Für dieses gegenseitige Ausrichten ist von zusätzlichem Vorteil, wenn der an der Stirnwand angeformte Bund bzw. Zentrierbund unter Zwischenlage mindestens einer ringförmigen Dichtung gegen die entsprechende Wand der Nut anliegt, und so im Verbindungsbereich eine flüssigkeitsdichte Verbindung zwischen Stirnwand und Gehäusemantel erreicht wird.

Vorzugsweise ist die Dichtung in eine Dichtungsnut eingelegt, welche in dem Bund bzw. Zentrierbund ausgebildet ist. Mit einer Ausgestaltung der elektrischen Antriebseinheit wird vorgeschlagen, dass das Getriebe ein Planetengetriebe ist, dessen Hohlrad die mit einer Verzahnung versehene Innenseite des Gehäusemantels ist. Die Verzahnung ist dergestalt als eine Schrägverzahnung ausgebildet, dass die in der Verzahnung angesammelte Kühlflüssigkeit in Richtung zu dem die Öffnungen aufweisenden Längsabschnitt des Gehäusemantels transportiert wird.

Weitere Vorteile und Einzelheiten der elektrischen Antriebsachse für ein Nutzfahrzeug ergeben sich aus der nachfolgenden Beschreibung eines auf der Zeichnung wiedergegebenen Ausführungsbeispiels. Im Einzelnen zeigen
Fig. 1: eine elektrische Antriebsachse für ein Nutzfahrzeug mit einem mehrstufigen Getribe in der Bauart als doppeltes Planetengetriebe, einem das Getriebe aufnehmenden Getriebegehäuse, einem daran angesetzten Motorgehäuse sowie einem ebenfalls an das Getriebegehäuse angesetzte Achsgehäuse;

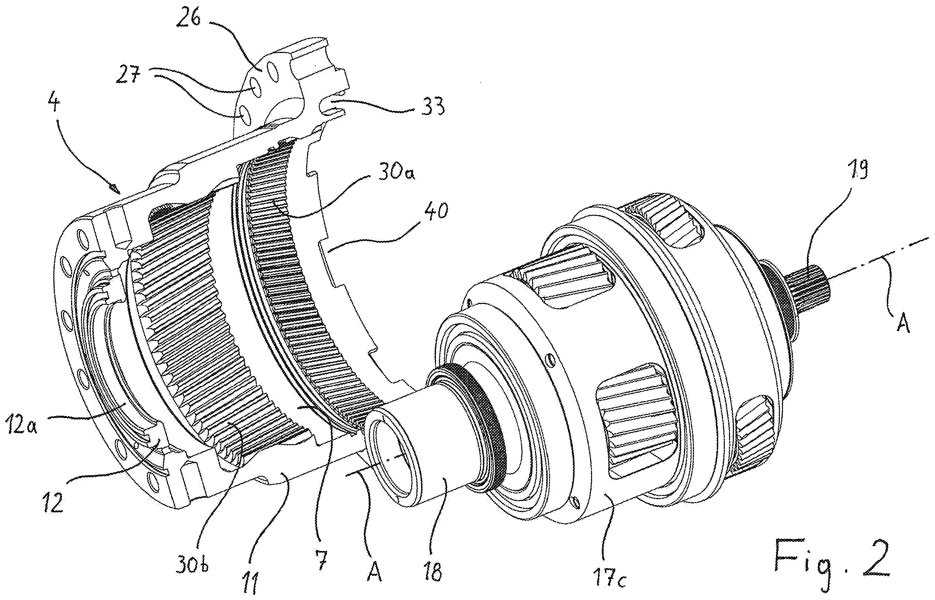

Fig. 2: einen perspektivischen Teilschnitt des Getriebegehäuses, zusammen mit einem Planetenradträger des Getriebes;
Fig. 3: einen perspektivischen Teilschnitt des Getriebegehäuses, zusammen mit einer zwischen dem Getriebegehäuse und dem Motorgehäuse angeordneten Stirnwand;
Fig. 3a: einen vergrößerten Detailausschnitt des Verbindungsbereichs aus Fig. 3;

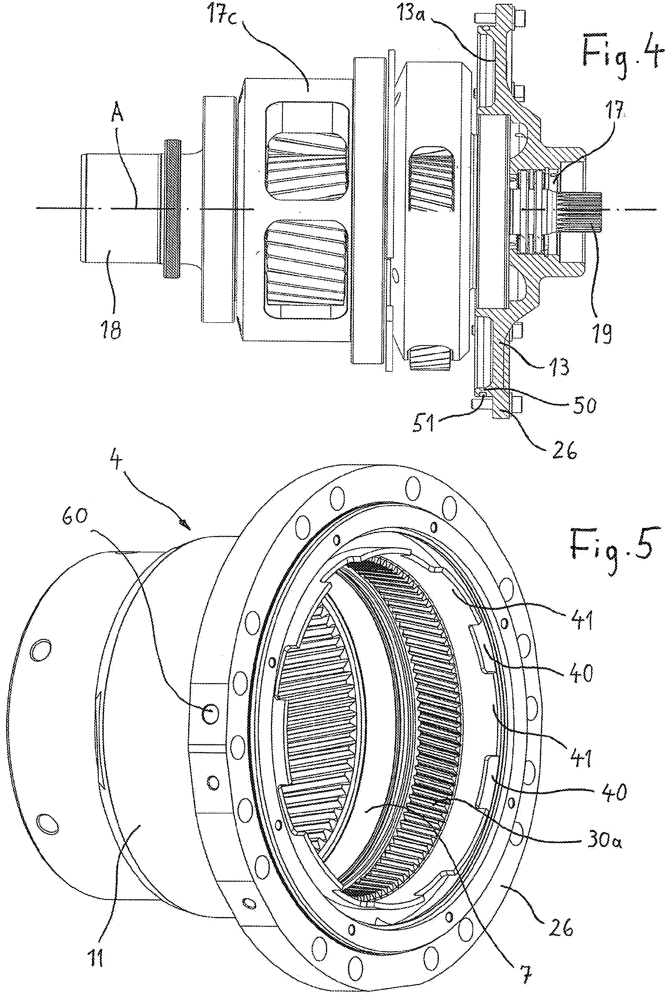

Fig. 4: einen Längsschnitt durch Teile des Getriebes und durch die Stirnwand, aber ohne das Getriebegehäuse;
Fig. 5: aus anderem Blickwinkel eine weitere perspektivische Ansicht des Getriebegehäuses;

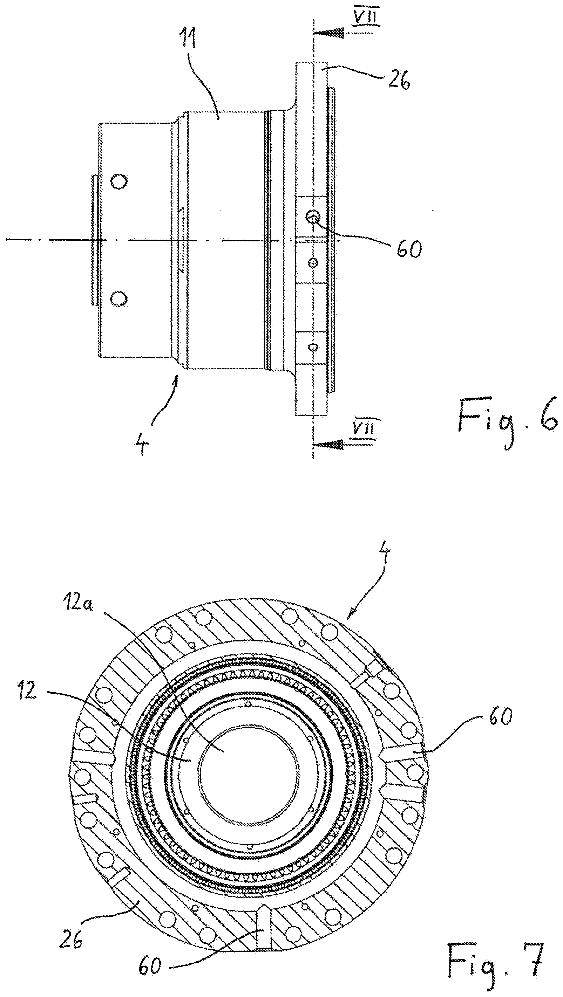

Fig. 6: eine Seitenansicht des Getriebegehäuses; und
Fig. 7: einen Schnitt durch das Getriebegehäuse gemäß der in Fig. 6 bezeichneten Schnitt ebene VII - VII.

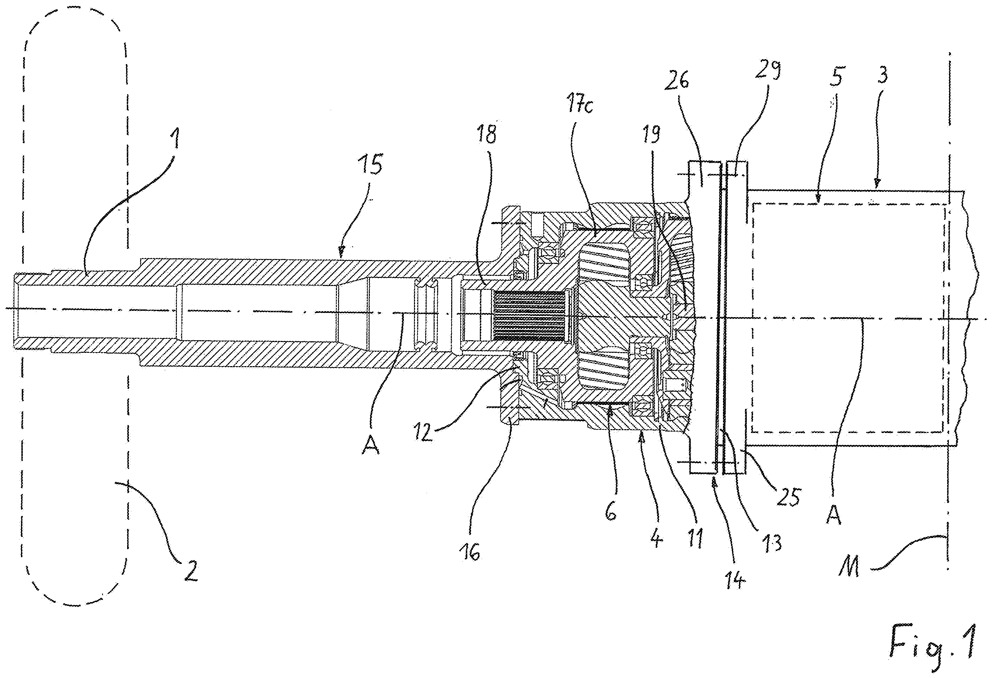

Die Fig. 1 zeigt in einer Übersichtsdarstellung die eine Hälfte einer elektrischen Antriebsachse für ein Kraftfahrzeug. Die dargestellte Hälfte der Achse dient dem Antrieb eines auf einem Achsschenkel 1 drehbar gelagerten, in Fig. 1 am linken Rand gestrichelt dargestellten Fahrzeugrades 2. Die ebenso gestaltete zweite Hälfte der Antriebsachse befindet sich symmetrisch auf der anderen Seite der in Fig. 1 eingetragenen Fahrzeugmittelebene M, und trägt das jeweilige Fahrzeugrad der anderen Fahrzeugseite. Die elektrische Antriebsachse ist in ihrer Gesamtheit eine von der einen bis zur anderen Fahrzeugseite durchgehende Starrachse.

Für jede Fahrzeugseite und damit zum Antrieb des jeweiligen Fahrzeugrades 2 ist nahe der Fahrzeugmittelebene M ein Elektroantrieb 5 vorgesehen, insbesondere ein Elektromotor. Jedem Elektromotor nach fahrzeugaußen nachgeschaltet ist jeweils ein Getriebe 6, hier in der Bauart eines zweistufigen Planetengetriebes.

Die zwei Elektroantriebe befinden sich in einem gemeinsamen Motorgehäuse 3, welches ein- oder mehrteilig sein kann. Jedes Getriebe 6 befindet sich in einem Getriebegehäuse 4, welches an dem Motorgehäuse 3 angeflanscht ist.

Das Getriebegehäuse 4 setzt sich unter anderem zusammen aus einem im Wesentlichen zylindrischen Gehäusemantel 11, der mit seiner Innenseite 7 die Getriebeelemente des Getriebes 6 ringförmig umgibt, und aus einer mit dem Gehäusemantel 11 einstückigen Stirn wand 12. Die Stirnwand 12 ist überwiegend geschlossen, lässt jedoch in ihrem Zentrum eine Getriebeöffnung 12a frei, durch die die auf der zentralen Drehachse A rotierende Getriebe ausgangswelle 18 des Getriebes 6 hindurchführt.

Auch an seinem anderen Ende ist das Getriebegehäuse 4 mit einer Stirnwand 13 versehen, die allerdings ein separates Bauteil ist. In einem in Kreisform umlaufenden Verbindungsbereich 14 sind diese Stirnwand 13 und der Gehäusemantel 11 flüssigkeitsdicht miteinander verbunden.

In ihrem Zentrum ist die Stirnwand 13 mit einer Öffnung 17 versehen, durch die die Eingangswelle 19 des Getriebes führt. Diese Eingangswelle 19 des Getriebes kann zugleich die Motorausgangswelle sein, und sie rotiert ebenfalls auf der Achse A**.**

Die Stirnwand 13 erstreckt sich von der Öffnung 17 für die Getriebeeingangswelle 19 radial nach außen bis zu dem Verbindungsbereich 14, in dem die Stirnwand 13 und der Gehäusemantel 11 flüssigkeitsdicht miteinander verbunden sind. Die aus der anderen Stirnwand 12 herausführende Getriebeausgangswelle 18 kann, vor zugsweise über eine Keilverzahnung, drehtest mit einer Antriebswelle verbunden sein, welche zu dem Fahrzeugrad 2 führt und dieses antreibt. Die Antriebswelle rotiert in einem rohrförmigen Achsgehäuse 15 der Antriebseinheit, welches sich ebenfalls auf der zentralen Ach se A erstreckt. Das Achsgehäuse 15 ist mittels eines Flansches 16 an der Stirnwand 12 befestigt.

Das Achsgehäuse 15 ist an seinem fahrzeugäußeren Ende mit dem Achsschenkel 1 versehen. Außerdem ist an dem Achsgehäuse 15 der Bremsträger der Fahrzeugbremse befestigt, vorzugsweise der Bremsträger einer Scheibenbremse. Ebenfalls an dem Achsgehäuse 15 befestigt sind Achsführungselemente, z. B. ein Längslenker und ggf. ein Querlenker der Fahrzeugachse.

Zur Befestigung des Achsgehäuses 15 an dem Getriebegehäuse 4 ist das Achsgehäuse 15 an seinem fahrzeuginneren Ende mit einem radial erweiterten Flansch 16 versehen. Der Flansch 16 ist mittels mehrerer Schrauben starr gegen die Stirnwand 12 des Getriebegehäuses 4 verschraubt.

Auch die Verbindung des den Elektroantrieb 5 aufnehmenden Motorgehäuses 3 und des Getriebegehäuses 4 erfolgt mittels Verschraubungen, wozu die jeweiligen Enden dieser Gehäuseteile als radiale Flansche 25, 26 gestaltet sind, die über Schrauben, welche durch Axialöffnungen 27 in dem Flansch 26 des Getriebegehäuses 4 hindurchführen, fest miteinander verbunden sind.

Das Getriebegehäuse 4 hat nicht nur die Gehäusefunktion, sondern es ist auch selbst Teil des Umlauf- bzw. Planetengetriebes, indem an der Innenseite 7 des Gehäusemantels 11 eine um die Drehachse A herum angeordnete Schrägverzahnung 30a der ersten Getriebestufe, und axial versetzt eine um die Drehachse A herum angeordnete Schrägverzahnung 30b der zweiten Getriebestufe ausgebildet ist. Jede der zwei Schrägverzahnungen 30a, 30b bildet daher jeweils das Hohlrad des betreffenden Planetengetriebes. Die Ausrichtung bzw. Schrägstellung der Zähne der Schrägverzahnung 30b ist entgegengesetzt zu den Zähnen der ersten Schrägverzahnung 30a. Mit den Schrägverzahnungen kämmen die Planetenräder der beiden Getriebestufen des Planetengetriebes.

Die übrigen Getriebeelemente der Planetengetriebe sind in einem auf der Achse A rotieren den Planetenradträger angeordnet, der als ein vormontierter Getriebeträger 17c in das Getriebegehäuse 4 eingesetzt ist. Zentrales Element des Getriebeträgers 17c ist die auf der Achse A drehende Getriebeausgangswelle 18, welche aus der ebenfalls zentral angeordneten Getriebeöffnung 12a des Getriebegehäuses 4 herausragt.

Die Kühlung des Getriebes 6 und dessen teils stark belasteter Zähne, Ritzel und Lager erfolgt mittels einer durch eine Pumpe umgewälzten Kühlflüssigkeit. Die Kühlflüssigkeit ist vorzugsweise ein Getriebeöl, so dass die Flüssigkeit sowohl die Getriebeelemente schmiert, als auch den Wärmeabtransport übernimmt.

Bedingt durch die Bauart als Planetengetriebe wird Kühl- und Schmierflüssigkeit infolge von Zentrifugalkräften von den Planetenrädern nach außen gegen die Schrägverzahnungen 30a, 30b geschleudert. Die Kühlflüssigkeit sammelt sich daher an der Innenseite 7 des Gehäusemantels 11, zugleich findet entlang dieser Innenseite 7 eine ausgeprägte Rotation der Flüssigkeit statt. Die Flüssigkeit ist aufzufangen und wieder dem Kühl- und Schmierprozess zur Verfügung zu stellen, indem die Flüssigkeit zurück in zentralere Bereiche des Getriebes so wie in den Bereich von Wälzlagern transportiert wird, zum Beispiel zu den Wälzlagern der Getriebeeingangswelle 19 und der Getriebeausgangswelle 18.

Die Schrägstellung beider Zahnräder 30a, 30b erzeugt bei einer aktiven Umlaufkühlung eine zu der Stirnwand 13 gerichtete Schaufelwirkung auf das Kühlmittel, verbunden mit einer Rotation des Getriebeöls entlang der Innenseite 7. Nur bei einer passiven Sumpfkühlung ist die Ausrichtung des Zahnrades 30b umgekehrt, so dass dann auch eine zu der Stirnwand 12 gerichtete Schaufelwirkung eintritt.

Als Folge der Rotation des Getriebeöls an der Innenseite 7 des Getriebegehäuses bildet sich dort ein stark strömender Ölsumpf, welcher, sofern keine zusätzlichen Maßnahmen wie nachfolgend beschrieben ergriffen würden, den idealen Ablauf der Schmierung und Kühlung er schweren würde. Denn die sich einstellende Strömung würde das im Rahmen der Umwälzung notwendige Absaugen des Getriebeöls erschweren, falls das Getriebeöl mit hoher Fließgeschwindigkeit an dem vorhandenen Ölablauf vorbeiströmen sollte, statt vollständig in den Ölablauf einzutreten.

Die Lösung dieses Problems besteht darin, eine die Achse A vorzugsweise in Kreisform um gebende Ringkammer 33 vorzusehen, die sich in Umfangsrichtung entlang jenes Verbindungsbereichs 14 erstreckt, in dem die Stirnwand 13 an dem Gehäusemantel 11 befestigt ist. Wichtig ist, dass die Ringkammer 33 nur über einzelne Öffnungen 40 mit dem Innenraum 7 des Getriebegehäuses verbunden ist. Die Öffnungen 40 sind über den Innenumfang der Ringkammer 33 gleichmäßig verteilt worden.

Die Ringkammer 33 dient der Beruhigung der in anderen Bereichen des Getriebegehäuses mit hoher Geschwindigkeit strömenden und vor allem entlang der Innenwandung stark rotierenden Kühlflüssigkeit. Für die Kühlflüssigkeit hat die Ringkammer 33 daher die Funktion einer Beruhigungszone, die nur auf bestimmten Umfangsabschnitten, nämlich im Bereich der einzelnen Öffnungen 40, zum Innenraum 7 hin offen ist, so dass die Kühlflüssigkeit bzw. das Getriebeöl über diese Öffnungen 40 in die Ringkammer 33 einströmt, und darin beruhigt wird.

Auf anderen Umfangsabschnitten hingegen ist die Ringkammer 33 im Wesentlichen gegen über dem Getriebeinnenraum 7 geschlossen, so dass auf diesen anderen Umfangsabschnitten kein wesentlicher Flüssigkeitsaustausch stattfindet und sich die Flüssigkeitsströmung entlang dieser zum Getriebeinnenraum hin geschlossenen Bereiche der Ringkammer 33 beruhigen kann. Die Strömungsberuhigung führt zu einer verbesserten Ölabsaugung bzw. einem verbesserten Ölablauf, was unmittelbar aus der Ringkammer 33 heraus erfolgt, z. B. durch einen am tiefsten Punkt der Ringkammer 33 in die Ringkammer einmündenden Kanal, durch den die Flüssigkeit nach unten zu einem Sammler abfließen kann.

Damit die Ringkammer 33 die Beruhigungszone bildet, wechseln sich in Umfangsrichtung der Ringkammer die Öffnungen 40 mit öffnungsfreien Umfangsabschnitten 41 ab. Die Zahl der Öffnungen 40 und der öffnungsfreien Umfangsabschnitte 41 ist gleich, beim Ausführungsbei spiel sind über den Umfang sechs Öffnungen 40 und analog sechs öffnungsfreie Umfangsabschnitte 41 vorhanden.

Der Durchmesser der Ringkammer 33 ist größer als der größte Durchmesser, den die Innenseite 7 des Gehäusemantels 11 außerhalb des Bereichs der Ringkammer 33 aufweist.

Indem sich die Ringkammer 33 entlang jenes Verbindungsbereichs 14 erstreckt, in dem die Stirnwand 13 an dem Gehäusemantel 11 befestigt ist, wird die Wandung der Ringkammer 33 teilweise durch den Gehäusemantel 11, und teilweise durch die Stirnwand 13 gebildet.

Die Ringkammer 33 ist zu dem Innenraum 7 hin durch eine innere Kammerwand 44, und zur Außenseite des Gehäusemantels 11 hin durch eine äußere Kammerwand 45 begrenzt. Die Öffnungen 40 und die öffnungsfreien Umfangsabschnitte 41 befinden sich in bzw. an der inneren Kammerwand 44. In herstellungstechnisch einfacher Weise ist die innere Kammerwand 44 zinnenförmig gestaltet, wobei Zinnen, die sich parallel zu der zentralen Achse A erstrecken, die öffnungsfreien Umfangsabschnitte 41 bilden, und die Umfangsabschnitte zwischen den Zinnen die Öffnungen 40 bilden. Sowohl die Zinnen als auch die zwischen den Zinnen angeordneten, öffnungsfreien Umfangsabschnitte 41 sind, bei einer radialen Ansicht der inneren Kammerwand 44, rechteckig gestaltet.

Die Wandung der Ringkammer 33 ist, soweit diese Wandung durch den Gehäusemantel 11 und nicht durch die Stirnwand 13 gebildet wird, eine in Kreisform um die Achse A umlaufende U-förmige Wandung in Gestalt einer zu der Stirnwand 13 hin offenen Nut. Die Länge dieser Nut und die Länge der Ringkammer 33 in Richtung der Achse A ist größer, als die maximale Breite der Ringkammer 33, gemessen zwischen der inneren Kammerwand 44 und der äußeren Kammerwand 45.

Die axiale Erstreckung der Öffnungen 40, d.h. deren Erstreckung in Richtung der Achse A, ist geringer als die axiale Länge der Ringkammer 33.

Die öffnungsfreien Umfangsabschnitte 41 erstrecken sich axial soweit in Richtung zu der Stirnwand 13, dass sie entweder die Innenseite 13a der Stirnwand 13 berühren, oder hier nur ein geringer Spalt bleibt, über den kein oder im Wesentlichen kein Flüssigkeitsaustausch möglich ist.

Die Stirnwand 13 trennt das Getriebe 6 von dem Elektroantrieb 5. Auf ihrer dem Getriebe 6 zugewandten Seite ist die Stirnwand 13 mit einem sich rechtwinklig zur Haupterstreckung der Stirnwand 13 erstreckenden Bund 50 versehen, der unter anderem als Zentrierbund dient. Der Bund 50 ist einstückiger Bestandteil der Stirnwand 13. Er ist von solcher axialer Länge, dass er sich in die Ringkammer 33 hinein erstreckt. Zum Zwecke der Zentrierung liegt der Bund 50 mit seiner Außenseite unter Zwischenlage einer Dichtung 51 radial gegen die äußere Kammerwand 45 an. Beim Ausführungsbeispiel beträgt die axiale Länge des umlaufenden Zentrierbundes ungefähr die Hälfte der axialen Erstreckung der Ringkammer 33.

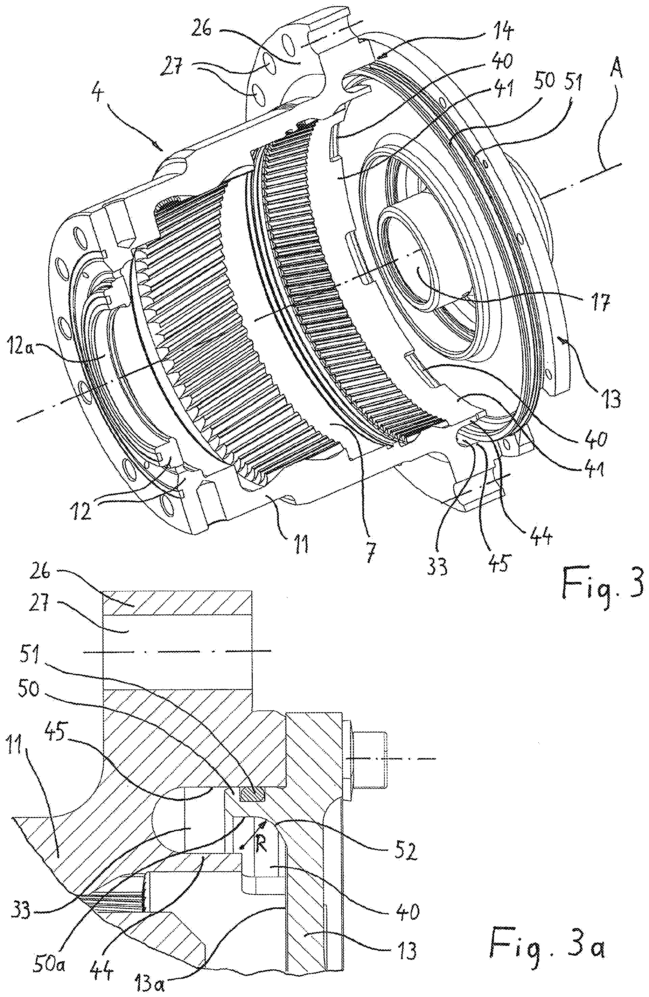

Da der Verbindungsbereich 14 flüssigkeitsdicht sein muss, liegt der Bund 50 unter Zwischenlage der ringförmigen Dichtung 51 radial gegen die Kammerwand 45 an. Die Dichtung 51 ist in eine Dichtungsnut auf der Außenseite des Bundes 50 eingelegt. Gemäß Fig. 3a ist der Übergang zwischen der sich quer zu der zentralen Achse A erstreckenden Innenseite 13a der Stirnwand 13 und der Innenseite 50a des Bundes 50 als eine Rundung 52 ausgebildet, und vorzugsweise als eine 90 °- Rundung mit einem Radius R der Rundung 52, der zwischen 25 % und 75 % der maximalen Breite der Ringkammer 33 zwischen der inneren 44 und der äußeren 45 Kammerwand beträgt. Die Ausbildung des Übergangs als Rundung 52 führt zu einer verbesserten Strömungsführung an der Ringkammer 33.

Mehrere radial verlaufende Bohrungen und Kanäle 60 führen von der Ringkammer 33 auf die Außenseite des Gehäusemantels 11 und insbesondere auf die Außenseite des Flansches 26 des Getriebegehäuses, da der Flansch 26 um die Ringkammer 33 herum angeordnet ist.

Eine der radialen Bohrungen oder Kanäle 60 ist ein Ölablauf, über den das in der Ringkammer 33 angesammelte und darin beruhigte Getriebeöl nach unten zu einem Sammler ablaufen kann. Aus diesem Grunde befindet sich diese Bohrung bzw. dieser Kanal an der tiefsten Stelle des Flansches 26.

Weitere Bohrungen bzw. Kanäle 60 können im Zusammenhang mit der Kühlmittelführung unterschiedlichen Funktionen und Zwecken dienen. Sie können z. B. ein Entlüftungsventil, ein Entlüftungsfilter, einen Messstopfen zur Detektion des Kühlflüssigkeitsstands im Getriebe, eine magnetisch arbeitende Fangvorrichtung für in der Flüssigkeit angesammelte Metallspäne, oder einen Temperatursensor zur Erfassung der Öltemperatur aufnehmen.

Da sich die Bohrungen bzw. Kanäle 60 nicht in dem eher dünnwandigen Teil des Getriebegehäuses, sondern im Bereich des radial erweiterten Flansches 26 des Getriebegehäuses befinden, ist hier genügend Platz für derartige zusätzliche Funktionsbauteile vorhanden. Zum Beispiel können die äußeren Enden der Bohrungen bzw. Kanäle 60 mit einem Gewinde versehen sein, in welches das jeweilige Funktionsbauteil von außen eingeschraubt ist.

Die Bohrungen bzw. Kanäle 60 befinden sich auf solchen Umfangsabschnitten des Flansches 26, auf denen dieser keine der Axialöffnungen 27 aufweist. Bezugszeichenliste
1 Achsschenkel
2 Fahrzeugrad
3 Motorgehäuse
4 Getriebegehäuse
5 Elektroantrieb
6 Getriebe
7 Innenseite
1 1 Gehäusemantel
12 Stirnwand
12a Getriebeöffnung
13 Stirnwand
13a Innenseite Stirnwand
14 Verbindungsbereich
15 Achsgehäuse
16 Flansch
17 Öffnung
17c Getriebeträger
18 Getriebeausgangswelle
19 Getriebeeingangswelle
25 Flansch
26 Flansch
27 Axialöffnung
30a Schrägverzahnung
30b Schrägverzahnung
33 Ringkammer
40 Öffnung
41 öffnungsfreier Umfangsabschnitt 44 innere Kammerwand
45 äußere Kammerwand
50 Bund, Zentrierbund 50a Innenseite Bund
51 Dichtung
52 Rundung
60 Bohrung, Kanal A Achse, Drehachse
M Fahrzeugmittellinie R Radius

## Patentansprüche

1. Elektrische Antriebseinheit für ein Kraftfahrzeug, mit einem Elektroantrieb (5), einem dem Elektroantrieb (5) in Kraftflussrichtung nachgeschalteten und in einem Getriebegehäuse (4) angeordneten Getriebe (6), Mitteln zum Umwälzen von Kühlflüssigkeit im Innenraum (7) des Getriebegehäuses (4), und einer drehbar angeordneten Eingangs- oder Ausgangswelle (19, 18) des Getriebes (6), wobei sich das Getriebegehäuse (4) aus einem eine zentrale Achse (A) ringförmig umgebenden Gehäusemantel (11) und einer Stirnwand (13) zusammensetzt, und **gekennzeichnet dadurch, dass** sich die Stirnwand (13) von einer Öffnung (17) für die Eingangs- oder die Ausgangswelle (19, 18) radial nach außen bis zu einem Verbindungsbereich (14) erstreckt, in dem die Stirnwand (13) und der Gehäusemantel (11) miteinander verbunden sind, wobei eine sich in Umfangsrichtung entlang des Verbindungsbereichs (14) erstreckende Ringkammer (33), die über einzelne Öffnungen (40) mit dem Innenraum (7) verbunden ist.

2. Elektrische Antriebseinheit nach Anspruch 1, **dadurch gekennzeichnet, dass** die Öffnungen (40) über den Innenumfang der Ringkammer (33) gleichmäßig verteilt angeordnet sind.

3. Elektrische Antriebseinheit nach Anspruch 1 oder 2, **dadurch gekennzeichnet, dass** sich in Umfangsrichtung die Öffnungen (40) mit öffnungsfreien Umfangsabschnitten (41) abwechseln.

4. Elektrische Antriebseinheit nach Anspruch 3, **dadurch gekennzeichnet, dass** die Zahl der Öffnungen (40) und der öffnungsfreien Umfangsabschnitte (41) jeweils sechs bis zehn beträgt.

5. Elektrische Antriebseinheit nach einem der vorangehenden Ansprüche, **dadurch gekennzeichnet, dass** die Wandung der Ringkammer (33) teilweise durch den Gehäusemantel (11) und teilweise durch die Stirnwand (13) gebildet wird.

6. Elektrische Antriebseinheit nach einem der vorangehenden Ansprüche, **dadurch gekennzeichnet, dass** die Ringkammer (33) die zentrale Achse (A) in Kreisform umgibt, und dass der Durchmesser der Ringkammer (33) größer ist als der größte Durchmesser, den die Innenseite (7) des Gehäusemantels (11) außerhalb des Bereichs der Ringkammer (33) aufweist.

7. Elektrische Antriebseinheit nach einem der Ansprüche 2 - 6, **dadurch gekennzeichnet, dass** die Ringkammer (33) zu dem Innenraum (7) hin durch eine innere Kammerwand (44), und zur Außenseite des Gehäusemantels (11) hin durch eine äußere Kammerwand (45) begrenzt ist, wobei sich die Öffnungen (40) und die öffnungsfreien Umfangsabschnitte (41) in bzw. an der inneren Kammerwand (44) befinden .

8. Elektrische Antriebseinheit nach Anspruch 7, **dadurch gekennzeichnet, dass** die innere Kammerwand (44) zinnenförmig gestaltet ist, wobei die Zinnen die öffnungsfreien Umfangsabschnitte (41) bilden.

9. Elektrische Antriebseinheit nach Anspruch 7 oder 8, **dadurch gekennzeichnet, dass** die Länge der Ringkammer (33) in Achsrichtung größer ist, als die maximale Breite der Ringkammer (33) zwischen der inneren (44) und der äußeren (45) Kammerwand.

10. Elektrische Antriebseinheit nach einem der Ansprüche 7 - 9, **gekennzeichnet durch** Bohrungen oder Kanäle (60) in dem Gehäusemantel (11), die von der Ringkammer (33) bis auf die Außenseite des Gehäusemantels (11) führen.

11. Elektrische Antriebseinheit nach Anspruch 10, **dadurch gekennzeichnet, dass** der Gehäusemantel (11) um die Ringkammer (33) herum als ein gegenüber dem übrigen Gehäusemantel radial erweiterter Flansch (26) ausgebildet ist, und dass die Bohrungen oder Kanäle (60) durch den Flansch (26) bis auf dessen Außenseite führen.

12. Elektrische Antriebseinheit nach Anspruch 11, **dadurch gekennzeichnet, dass** der Flansch (26) mit über seinen Umfang verteilt angeordneten Axialöffnungen (27) zur Aufnahme von Schrauben oder Schraubbolzen versehen ist.

13. Elektrische Antriebseinheit nach einem der Ansprüche 7 - 12, **dadurch gekennzeichnet, dass** die Stirnwand (13) mit einem sich in die Ringkammer (33) erstreckenden Bund (50) versehen ist, und dass der Übergang zwischen dem radial sich erstreckenden Teil der Stirnwand (13) und dem Bund (50) als Rundung (52) ausgebildet ist, wobei vorzugsweise der Radius (R) der Rundung (52) zwischen 25 % und 75 % der maximalen Breite der Ringkammer (33) zwischen der inneren (44) und der äußeren (45) Kammerwand beträgt.

14. Elektrische Antriebseinheit nach Anspruch 5, **dadurch gekennzeichnet, dass** die Wandung der Ringkammer (33), soweit diese durch den Gehäusemantel (11) gebildet wird, eine U-förmige Wandung einer zu der Stirnwand (13) hin offenen Nut ist.

15. Elektrische Antriebseinheit nach Anspruch 14, **dadurch gekennzeichnet, dass** die Stirnwand (13) mit einem sich in die Ringkammer (33) erstreckenden Bund (50) versehen ist, der gegen eine der Wände der Nut anliegt, vorzugsweise gegen die radial äußere Wand der Nut.

16. Elektrische Antriebseinheit nach Anspruch 15, **dadurch gekennzeichnet, dass** der Bund (50) unter Zwischenlage mindestens einer ringförmigen Dichtung (51) gegen die Wand der Nut anliegt.

17. Elektrische Antriebseinheit nach Anspruch 16, **dadurch gekennzeichnet, dass** die Dichtung (51) in eine Dichtungsnut eingelegt ist, welche in dem Bund (50) ausgebildet ist.

18. Elektrische Antriebseinheit nach einem der vorangehenden Ansprüche, **dadurch gekennzeichnet, dass** das Getriebe (6) ein Planetengetriebe ist, dessen Hohlrad die mit einer Verzahnung (30a) versehene Innenseite des Gehäusemantels (11) ist, wobei die Verzahnung (30a) als Schrägverzahnung dergestalt ausgebildet ist, dass die in der Verzahnung angesammelte Kühlflüssigkeit in Richtung zu dem die Öffnungen (40) aufweisenden Längsabschnitt des Gehäusemantels (11) transportiert wird.

## Claims

1. Electric drive unit for a motor vehicle, comprising an electric drive (5), a gearbox (6) downstream of the electric drive (5) in the direction of power flow and arranged in a gearbox housing (4), means for circulating cooling fluid in the interior (7) of the gearbox housing (4), and a rotatably arranged input or output shaft (19, 18) of the gearbox (6), the gearbox housing (4) consisting of a housing casing (11) annularly surrounding a central axis (A) and an end wall (13), and **characterized in that** the end wall (13) extends radially outward from an opening (17) for the input or output shaft (19, 18) to a connection region (14) in which the end wall (13) and the housing casing (11) are connected to one another, an annular chamber (33) which extends in the circumferential direction along the connection region (14) and is connected to the interior (7) via individual openings (40).

2. Electric drive unit according to claim 1, **characterized in that** the openings (40) are evenly distributed around the inner circumference of the annular chamber (33).

3. Electric drive unit according to claim 1 or claim 2, **characterized in that** the openings (40) alternate with circumferential portions (41) without openings in the circumferential direction.

4. Electric drive unit according to claim 3, **characterized in that** the number of openings (40) and of circumferential portions (41) without openings is six to ten in each case.

5. Electric drive unit according to any of the preceding claims, **characterized in that** the wall of the annular chamber (33) is formed partly by the housing casing (11) and partly by the end wall (13).

6. Electric drive unit according to any of the preceding claims, **characterized in that** the annular chamber (33) surrounds the central axis (A) in a circular shape, and **in that** the diameter of the annular chamber (33) is larger than the largest diameter that the inside (7) of the housing casing (11) has outside the region of the annular chamber (33).

7. Electric drive unit according to any of claims 2 - 6, **characterized in that** the annular chamber (33) is bounded toward the interior (7) by an inner chamber wall (44) and toward the outside of the housing casing (11) by an outer chamber wall (45), the openings (40) and the circumferential portions (41) without openings being located in or on the inner chamber wall (44).

8. Electric drive unit according to claim 7, **characterized in that** the inner chamber wall (44) is designed in a crenelated shape, the crenelations forming the circumferential portions (41) without openings.

9. Electric drive unit according to claim 7 or claim 8, **characterized in that** the length of the annular chamber (33) in the axial direction is greater than the maximum width of the annular chamber (33) between the inner chamber wall (44) and the outer chamber wall (45).

10. Electric drive unit according to any of claims 7 - 9, **characterized by** bores or channels (60) in the housing casing (11) leading from the annular chamber (33) to the outside of the housing casing (11).

11. Electric drive unit according to claim 10, **characterized in that** the housing casing (11) is formed around the annular chamber (33) as a flange (26) which is radially expanded with respect to the rest of the housing casing, and **in that** the bores or channels (60) extend through the flange (26) to its outside.

12. Electric drive unit according to claim 11, **characterized in that** the flange (26) is provided with axial openings (27), distributed around its circumference, for receiving screws or bolts.

13. Electric drive unit according to any of claims 7 - 12, **characterized in that** the end wall (13) is provided with a collar (50) which extends into the annular chamber (33), and **in that** the transition between the radially extending part of the end wall (13) and the collar (50) is formed as a rounded portion (52), the radius (R) of the rounded portion (52) preferably being between 25% and 75% of the maximum width of the annular chamber (33) between the inner chamber wall (44) and the outer chamber wall (45).

14. Electric drive unit according to claim 5, **characterized in that** the wall of the annular chamber (33), insofar as it is formed by the housing casing (11), is a U-shaped wall of a groove which is open toward the end wall (13).

15. Electric drive unit according to claim 14, **characterized in that** the end wall (13) is provided with a collar (50) which extends into the annular chamber (33) and abuts one of the walls of the groove, preferably the radially outer wall of the groove.

16. Electric drive unit according to claim 15, **characterized in that** the collar (50) abuts the wall of the groove with at least one annular seal (51) in between.

17. Electric drive unit according to claim 16, **characterized in that** the seal (51) is inserted into a sealing groove which is formed in the collar (50).

18. Electric drive unit according to any of the preceding claims, **characterized in that** the gearbox (6) is a planetary gearbox, the ring gear of which is the inner side of the housing casing (11) provided with teeth (30a), the teeth (30a) being designed as helical teeth in such a way that the cooling fluid accumulated in the teeth is transported in the direction of the longitudinal portion of the housing casing (11) having the openings (40).

## Revendications

1. Unité d'entraînement électrique pour un véhicule automobile, comportant un entraînement électrique (5), un engrenage (6) monté en aval de l'entraînement électrique (5) dans le sens du flux de force et disposé dans un boîtier d'engrenage (4), des moyens permettant de faire circuler un liquide de refroidissement dans l'espace intérieur (7) du boîtier d'engrenage (4), et un arbre d'entrée ou de sortie (19, 18) de l'engrenage (6) disposé de manière à pouvoir tourner, dans laquelle le boîtier d'engrenage (4) est constitué d'une enveloppe de boîtier (11) entourant de manière annulaire un axe central (A) et d'une paroi frontale (13), et **caractérisée en ce que** la paroi frontale (13) s'étend radialement vers l'extérieur depuis une ouverture (17) pour l'arbre d'entrée ou l'arbre de sortie (19, 18) jusqu'à une zone de liaison (14) dans laquelle la paroi frontale (13) et l'enveloppe de boîtier (11) sont reliées l'une à l'autre, dans laquelle une chambre annulaire (33) s'étendant dans la direction circonférentielle le long de la zone de liaison (14), laquelle chambre annulaire est reliée à l'espace intérieur (7) par l'intermédiaire d'ouvertures (40) individuelles.

2. Unité d'entraînement électrique selon la revendication 1, **caractérisée en ce que** les ouvertures (40) sont disposées de manière à être réparties uniformément sur la circonférence intérieure de la chambre annulaire (33).

3. Unité d'entraînement électrique selon la revendication 1 ou 2, **caractérisée en ce que**, dans la direction circonférentielle, les ouvertures (40) alternent avec des sections circonférentielles sans ouvertures (41).

4. Unité d'entraînement électrique selon la revendication 3, **caractérisée en ce que** le nombre d'ouvertures (40) et de sections circonférentielles sans ouvertures (41) va respectivement de six à dix.

5. Unité d'entraînement électrique selon l'une des revendications précédentes, **caractérisée en ce que** la paroi de la chambre annulaire (33) est formée en partie par l'enveloppe de boîtier (11) et en partie par la paroi frontale (13).

6. Unité d'entraînement électrique selon l'une des revendications précédentes, **caractérisée en ce que** la chambre annulaire (33) entoure l'axe central (A) en forme de cercle, et **en ce que** le diamètre de la chambre annulaire (33) est supérieur au plus grand diamètre que présente la face intérieure (7) de l'enveloppe de boîtier (11) en dehors de la zone de la chambre annulaire (33).

7. Unité d'entraînement électrique selon l'une des revendications 2 à 6, **caractérisée en ce que** la chambre annulaire (33) est délimitée vers l'espace intérieur (7) par une paroi de chambre intérieure (44), et vers la face extérieure de l'enveloppe de boîtier (11) par une paroi de chambre extérieure (45), dans laquelle les ouvertures (40) et les sections circonférentielles sans ouvertures (41) se trouvent dans ou sur la paroi de chambre intérieure (44).

8. Unité d'entraînement électrique selon la revendication 7, **caractérisée en ce que** la paroi de chambre intérieure (44) est conçue en forme de créneaux, dans laquelle les créneaux forment les sections circonférentielles sans ouverture (41).

9. Unité d'entraînement électrique selon la revendication 7 ou 8, **caractérisée en ce que** la longueur de la chambre annulaire (33) dans la direction axiale est supérieure à la largeur maximale de la chambre annulaire (33) entre la paroi de chambre intérieure (44) et la paroi de chambre extérieure (45).

10. Unité d'entraînement électrique selon l'une des revendications 7 à 9, **caractérisée par** des alésages ou des canaux (60) dans l'enveloppe de boîtier (11) qui mènent de la chambre annulaire (33) jusqu'à la face extérieure de l'enveloppe de boîtier (11).

11. Unité d'entraînement électrique selon la revendication 10, **caractérisée en ce que** l'enveloppe de boîtier (11) est réalisée autour de la chambre annulaire (33) sous la forme d'une bride (26) élargie radialement par rapport au reste de l'enveloppe de boîtier, et **en ce que** les alésages ou canaux (60) traversent la bride (26) jusqu'à la face extérieure de celle-ci.

12. Unité d'entraînement électrique selon la revendication 11, **caractérisée en ce que** la bride (26) est pourvue d'ouvertures axiales (27) disposées de manière à être réparties sur sa circonférence pour la réception de vis ou de boulons filetés.

13. Unité d'entraînement électrique selon l'une des revendications 7 à 12, **caractérisée en ce que** la paroi frontale (13) est pourvue d'une collerette (50) s'étendant dans la chambre annulaire (33), et **en ce que** la transition entre la partie s'étendant radialement de la paroi frontale (13) et la collerette (50) est réalisée sous la forme d'un arrondi (52), dans laquelle, de préférence, le rayon (R) de l'arrondi (52) est compris entre 25 % et 75 % de la largeur maximale de la chambre annulaire (33) entre la paroi de chambre intérieure (44) et la paroi de chambre extérieure (45).

14. Unité d'entraînement électrique selon la revendication 5, **caractérisée en ce que** la paroi de la chambre annulaire (33), dans la mesure où celle-ci est formée par l'enveloppe de boîtier (11), est une paroi en forme de U d'une rainure ouverte en direction de la paroi frontale (13).

15. Unité d'entraînement électrique selon la revendication 14, **caractérisée en ce que** la paroi frontale (13) est pourvue d'une collerette (50) s'étendant dans la chambre annulaire (33), laquelle collerette s'appuie contre l'une des parois de la rainure, de préférence contre la paroi radialement extérieure de la rainure.

16. Unité d'entraînement électrique selon la revendication 15, **caractérisée en ce que** la collerette (50) s'appuie contre la paroi de la rainure avec interposition d'au moins un joint d'étanchéité (51) annulaire.

17. Unité d'entraînement électrique selon la revendication 16, **caractérisée en ce que** le joint d'étanchéité (51) est inséré dans une rainure d'étanchéité qui est réalisée dans la collerette (50).

18. Unité d'entraînement électrique selon l'une des revendications précédentes, **caractérisée en ce que** l'engrenage (6) est un engrenage planétaire dont la couronne est la face intérieure de l'enveloppe de boîtier (11) pourvue d'une denture (30a), dans laquelle la denture (30a) est réalisée comme une denture hélicoïdale de telle sorte que le liquide de refroidissement accumulé dans la denture est transporté en direction de la section longitudinale de l'enveloppe de boîtier (11) présentant les ouvertures (40).
